# EUROPÄISCHE PATENTSCHRIFT

(11) **EP 1 038 232 B1**
(45) Veröffentlichungstag und Bekanntmachung des Hinweises auf die Patenterteilung: **21.11.2001**
(21) Anmeldenummer: 98966200.2
(22) Anmeldetag: 07.12.1998
(51) Int. Cl.: G06F 13/38

(54) **KOMMUNIKATIONSSCHNITTSTELLE ZUR SERIELLEN ÜBERTRAGUNG DIGITALER DATEN UND KORRESPONDIERENDES DATENÜBERTRAGUNGSVERFAHREN**
COMMUNICATIONS INTERFACE FOR SERIALLY TRANSMITTING DIGITAL DATA, AND CORRESPONDING DATA TRANSMISSION METHOD
INTERFACE DE COMMUNICATION DESTINEE A LA TRANSMISSION SERIE DE DONNEES NUMERIQUES ET PROCEDE DE TRANSMISSION DE DONNEES CORRESPONDANT

(30) Priorität: 18.12.1997 DE 19756540
(43) Veröffentlichungstag der Anmeldung: 27.09.2000
(73) Patentinhaber: SIEMENS AKTIENGESELLSCHAFT, 80333 München (DE)
(72) Erfinder: BEYER, Hans-Jürgen, D-08134 Wildenfels (DE)
(86) Internationale Anmeldenummer: DE9803597
(87) Internationale Veröffentlichungsnummer: WO9932984

(56) Entgegenhaltungen:
- EP-A- 0 568 520
- US-A- 5 025 500
- US-A- 5 754 780

## Beschreibung

Die Erfindung betrifft eine Kommunikationsschnittstelle gemäß dem Oberbegriff des Anspruchs 1 sowie ein serielles Datenübertragungsverfahren gemäß dem Oberbegriff des Anspruchs 5. Eine derartige Kommunikationsschnittstelle ist aus der US-A-5 025 500 bekannt.

Bei serieller Datenübertragung muß oft ein Kompromiß bezüglich der Parameter Geschwindigkeit, Störsicherheit und Stromaufnahme eingegangen werden. Den höchsten Datendurchsatz bei vorgegebener Taktfrequenz erreicht die synchrone Übertragung mit separater Daten-, Takt- und Steuerleitung. Diese synchrone Übertragung ist jedoch besonders störempfindlich und daher für die Verwendung von Datensicherungsmechanismen zur Erkennung von Mehrfachfehlern nur bedingt geeignet.

Andere Verfahren, wie synchrone Übertragung mit Taktrückgewinnung oder asynchrone Übertragung, sind mit gleicher Taktfrequenz bedeutend langsamer. Ursache dafür ist die notwendige Übertragung von Zusatzinformationen zur Synchronisation bzw. die erforderliche Mehrfachabtastung. Eine Erhöhung der Übertragungsrate ist durch die proportional steigende Stromaufnahme nur begrenzt möglich.

Die Aufgabe der vorliegenden Erfindung besteht darin, eine Kommunikationsschnittstelle zur seriellen Übertragung digigaler Daten bzw. ein serielles Datenübertragungsverfahren zur bitweisen Übertragung digitaler Daten anzugeben, mit der bzw. mit dem eine störsichere serielle Übertragung mit den Geschwindigkeitsvorteilen der synchronen Übertragung und einer sicheren Synchronisation zwischen Takt und Daten möglich ist.

Bekannt ist bereits, die Übertragungsstrecke durch Schirmung oder eine Begrenzung der Länge so sicher zu gestalten, daß eine Erkennung von Einzelfehlern ausreicht, um eine hinreichend störsichere Übertragung zu gewährleisten. In diesem Fall ist eine Synchronisation des Beginns und des Endes der Datenübertragung mit einer Start/Stop-Synchronisation über die Steuerleitung gegeben. Die Bitsynchronisation wird durch das Zählen der Takte zwischen Start und Stop überwacht. Die Daten selbst werden über ein Paritybit gesichert.

Im Falle einer synchronen Übertragung mit Taktrückgewinnung wird die Nutzinformation derart codiert, daß der entstehende Bitstrom eine ausreichende Anzahl von Flankenwechsein enthält (Manchester-Kodierung, Bit-Stuffing, 4B/5B usw.), anhand derer der Sendetakt zurückgewonnen werden kann (Bit-Synchronisation). Die Start/Stop-Synchronisation erfolgt über spezielle Bitfolgen, die im restlichen Telegramm nicht vorkommen (BOF,EOF). Nachteilig ist dabei die größere zu übertragende Datenmenge infolge der Kodierung (Faktor 1,25.. .2). Dabei fällt die zusätzliche Start- und Endekennung besonders stark bei kleinen Nutzdatenmengen ins Gewicht.

Bei der asynchronen Übertragung erfolgt die Bitsynchronisation über ein Start- und Stopbit. Die Synchronisation ist allerdings nur über eine begrenzte Anzahl von Bitzeiten gewährleistet, so daß diese Folge regelmäßig wiederholt werden muß. Die Start/Stop-Synchronisation eines Telegramms erfolgt wie bei der synchronen Übertragung mit Taktrückgewinnung mit einer expliziten Start- und Endekennung. Nachteilig ist auch hier die größere zu übertragende Datenmenge. Außerdem muß bei asynchroner Übertragung mehrfach abgetastet werden, was entweder die Datenrate mindert oder den Stromverbrauch erhöht.

Die vorliegende Erfindung löst das Problem, indem die zu übertragenden Teilinformationen, die Daten, der Takt und der Beginn bzw. das Ende der Datenübertragung (Start/Stop) im Sender nach einer festgelegten Kodierungsvorschrift in speziellen Zustandsfolgen umgesetzt werden, und im Empfänger aus diesen Zustandsfolgen wieder in die oben genannren Teilinformationen zurücktransformiert werden.

Dazu ist eine Kommunikationsschnittstelle zur seriellen Übertragung digitaler Daten vorgesehen, wobei mindestens drei Signalleitungen, den jeweils ein "High" oder "Low" Pegel einprägbar ist, vorgesehen sind, wobei ein zu übertragendes Datum durch einen Pegelwechsel von zwei der mindestens drei Signalleitungen (Tx0, Tx1, Tx2) und damit durch den Übergang von einem ersten Pegel-n-Tupel zu einem zweiten Pegel-n-Tupel kodierbar ist.

Im Falle von genau drei Signalleitungen (Tx0, Tx1, Tx2) ist das zu übertragende Datum durch den Übergang von einem ersten Pegeltripel zu einem zweiten Pegeltripel kodierbar. Da über die Kommunikationsschnittstelle z.B. auch Synchronisationsinformationen übertragbar sind, umfaßt der Begriff "Datum" zusätzlich zumindest auch derartige Informationen.

Die zulässigen Übergänge von einem ersten Pegel-n-Tupel bzw. ersten Pegeltripel zu einem zweiten Pegel-n-Tupel bzw. zweiten Pegeltripel, werden in einem Kodierungsschema festgelegt und sind in dieser Form in den über die Kommunikationsschnittstelle kommunikativ verbindbaren Kommunikationsteilnehmern abspeicherbar. Damit sind die Kodierungsschemata im Empfänger insbesondere auch zur Fehlererkennung und Unterdrückung nutzbar.

Damit ist ein serielles Datenübertragungsverfahren zur bitweisen Übertragung digitaler Daten mit mindestens drei Signalleitungen, denen jeweils ein "High"- oder "Low"-Pegel einprägbar ist, wobei ein zu übertragendes Datenbit durch einen Pegelwechsel von zwei der mindestens drei Signalleitungen (Tx0, Tx1, Tx2) und damit durch den Übergang von einem ersten Pegeltripel zu einem zweiten Pegeltripel kodiert ist, ausführbar.

Die Datenübertragung ist dabei besonders unempfindlich gegenüber Störungen, wenn das zu übertragende Datenbit durch einen Pegelwechsel von zwei der mindestens drei Signalleitungen codiert ist.

Wenn der Pegelwechsel der mindestens zwei Signalleitungen gegensinnig erfolgt, ist die Störempfindlichkeit noch weiter reduziert.

Wenn der Beginn und das Ende der Datenübertragung durch eine Invertierung der jeweiligen Pegel der mindestens drei Signalleitungen codierbar ist, ist eine Start/Stop-Synchronisation mit nur einer Bitzeit möglich, so daß bei kurzen Telegrammen ein hoher Datendurchsatz möglich ist.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: das Prinzip der Zustandsfolgekodierung anhand eines Zustandsgraphen und
- FIG 2: die Übertragung von Nutzdaten mit der Zustandfolgekodierung.

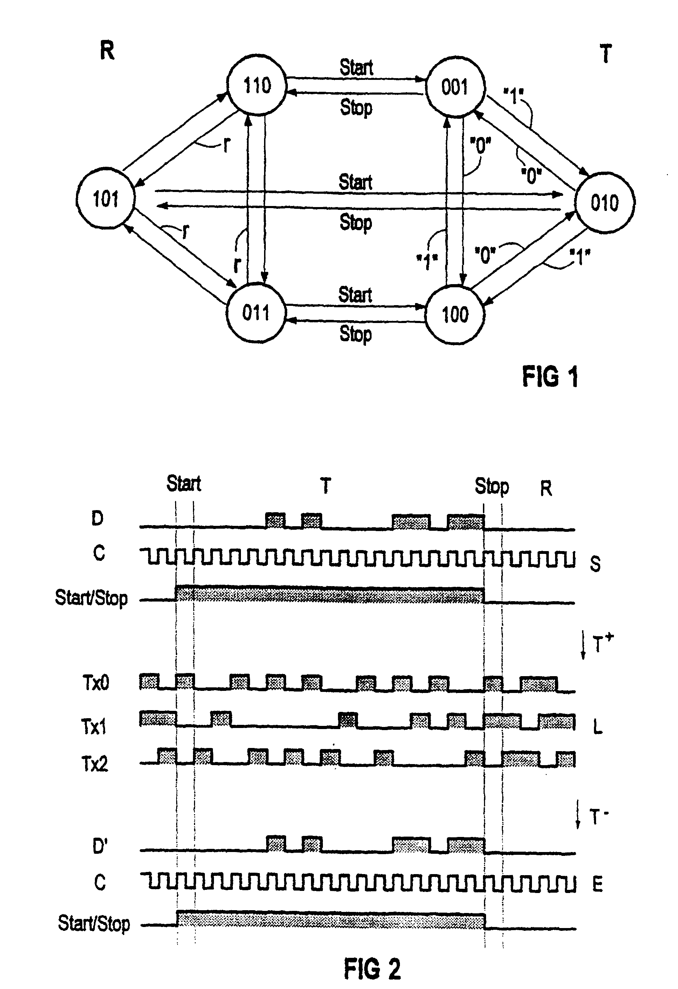

Nach einer festgelegten Kodierungsvorschrift, die im folgenden anhand von Figur 1 erläutert wird, werden die zu übertragenden Teilinformationen in spezielle Zustandsfolgen umgesetzt.

Der in Figur 1 dargestellte Zustandsgraph weist sechs Knoten mit zwischen diesen Knoten definierten Übergängen auf. Jeder dieser Knoten repräsentiert ein Pegel- , Status- oder Zustandstripel. Während einer Busübertragung werden nur die Zustände 001_{B}, 010_{B} und 100_{B} verwendet, da sich bei diesen Zustandstripeln beim Übergang von einem ersten zu einem zweiten Tripel jeweils genau zwei Pegel gegensinnig ändern. Der Übergang vom Pegeltripel 001_{B} zum Pegeltripel 010_{B} markiert dabei die Übertragung einer logischen 1; der Übergang vom Pegeltripel 001_{B} zum Pegeltripel 100_{B} markiert die Übertragung einer logischen 0; usw..

Während der Busruhe R werden nur die Zusände 110_{B}, 101_{B} und 011_{B} verwendet, da sich beim Übergang von einem ersten Zustandstripel dieser Menge zu einem zweiten Zustandstripel dieser Menge wiederum genau zwei Pegel gegensinnig ändern.

Um von der Betriebsart der Datenübertragung T in die Betriebsart der Busruhe R zu gelangen bzw. um von der Betriebsart der Busruhe R in die Betriebsart der Datenübertragung T zu gelangen, ist ein Start-Stopp-Übergang erforderlich. Dieser Start-Stopp-Übergang ist durch das Invertieren aller drei Pegel gekennzeichnet. Wenn im letzten Schritt der Datenübertragung eine logische 1 mit dem Wechsel vom Pegeltripel 010_{B} zum Pegeltripel 100_{B} übertragen wird, schließt sich ein Stoppübergang vom Pegeltripel 100_{B} zum Pegeltripel 011_{B} an. Daraufhin erfolgt der Übergang in die Betriebsart der Busruhe R, in dem die zum Pegeltripel 110_{B} gehörigen Pegel auf die drei Signalleitungen gelegt werden. Aus diesem Zustand der Busruhe R gelangt man durch einen Startübergang wieder in die Betriebsart der Datenübertragung T - Pegeltripel 001_{B} - wobei eine logische 1 durch einen Übergang zum Pegeltripel 010_{B} bzw. eine logische 0 durch einen Übergang zum Pegeltripel 100_{B} markiert wird.

Der aktuelle Zustand der drei Signalleitungen wird jeweils durch einen Knoten des Zustandsgraphen bezeichnet. Zu einem bestimmten Zeitpunkt ist jeweils nur einer der Knoten des Zustandsgraphen gültig. Die Knoten des Zustandsgraphen beschreiben gleichsam Positionen auf einem Weg, wobei die zwischen den Knoten definierten Übergänge die möglichen Wege festlegen. Im Zustandsgraphen nicht definierte Übergänge sind nicht möglich; so ist Figur 1 z.B. ein direkter Übergang vom Pegeltripel 001_{B} zum Pegeltripel 011_{B} nicht möglich. Die mit dem Zustandsgraphen gemäß Figur 1 festgelegte Kodierungsvorschrift wird als Zustandsfolgekodierung bezeichnet. Zusätzlich besteht auch die Möglichkeit, Datensicherungsmechanismen zur Erkennung von Mehrfachfehlern bzw. zur Fehlerkorrektur anzuwenden.

Figur 2 zeigt eine exemplarische Datenübertragung nach dem Prinzip der Zustandsfolgekodierung. Sowohl im Sender S (erste Ordinate im oberen Drittel) als auch im Empfänger E (erste Ordinate im unteren Drittel) liegen die Daten D, D' bitseriell vor. Die Daten D, D' sind in herkömmlicher Weise durch einen Wechsel von "High" und "Low"-Pegeln gekennzeichnet, wobei mehrere hintereinanderliegende gleichartige Pegel anhand des Taktsignals C (jeweils mittlere Ordinate sowohl im oberen Drittel als auch im unteren Drittel) unterscheidbar sind. Die Datenübertragung beginnt, wenn der Start-Stopp-Leitung ein high-Pegel eingeprägt wird und endet wenn der Pegel dieser Leitung wieder auf Low wechselt (dritte Ordinate sowohl im oberen als auch im unteren Drittel).

Im mittleren Drittel ist die Signalfolge auf der Übertragungsstrecke L, den drei Signalleitungen (Tx0, Tx1, Tx2), die sich nach der Zustandsfolgekodierung der Sendedaten D (erste Ordinate oberes Drittel) ergibt, aufgetragen. Die Sendedaten D werden im Empfänger E nach der Kodierungsvorschrift der Zustandsfolgekodierung wieder in bitserielle Daten D' umgewandelt (erste Ordinate unteres Drittel).

## Patentansprüche

1. Kommunikationsschnittstelle zur seriellen Übertragung digitaler Daten, wobei mindestens drei Signalleitungen (Tx0, Tx1, Tx2) vorgesehen sind, denen jeweils ein "High"- oder "Low-Pegel einprägbar ist, **dadurch gekennzeichnet, daß** ein zu übertragendes Datum durch einen Pegelwechsel von mindestens zwei der mindestens drei Signalleitungen (Tx0, Tx1, Tx2)⁻ und damit durch den Übergang von einem ersten Pegel-n-Tupel zu einem zweiten Pegel-n-Tupel, der sich in mindestens zwei Pegelwerten unterscheidet, kodierbar ist.

2. Kommunikationsschnittstelle nach Anspruch 1, **dadurch gekennzeichnet, daß** das erste Pegel-n-Tupel bzw. das zweite Pegel-n-Tupel ein erstes Pegeltripel bzw. ein zweites Pegeltripel ist.

3. Kommunikationsschnittstelle nach Anspruch 1 oder 2, **dadurch gekennzeichnet, daß** der Pegelwechsel der mindestens zwei Signalleitungen gegensinnig erfolgt.

4. Kommunikationsschnittstelle nach Anspruch 1, 2 oder 3, **dadurch gekennzeichnet, daß** der Beginn und das Ende der Datenübertragung durch eine Invertierung der jeweiligen Pegel der drei Signalleitungen (Tx0, Tx1, Tx2) kodierbar ist.

5. Serielles Datenübertragungsverfahren zur bitweisen Übertragung digitaler Daten, wobei mindestens drei Signalleitungen (Tx0, Tx1, Tx2) vorgesehen sind, denen jeweils ein "High"- oder "Low"-Pegel einprägbar ist, **dadurch gekennzeichnet, daß** ein zu übertragendes Datum durch einen Pegelwechsel von zwei der mindestens drei Signalleitungen (Tx0, Tx1, Tx2) und damit durch den Übergang von einem ersten Pegel-n-Tupel zu einem zweiten Pegel-n-Tupel, der sich in mindestens zwei Pegelwerten unterscheidet, kodiert ist.

6. Datenübertragungsverfahren nach Anspruch 5, **dadurch gekennzeichnet, daß** das erste Pegel-n-Tupel bzw. das zweite Pegel-n-Tupel ein erstes Pegeltripel bzw. ein zweites Pegeltripel ist.

7. Datenübertragungsverfahren nach Anspruch 5 oder 6, **dadurch gekennzeichnet, daß** der Beginn und das Ende der Datenübertragung durch eine Invertierung der jeweiligen Pegel der drei Signalleitungen (Tx0, Tx1, Tx2) kodiert ist.

8. Automatisierungsgerät zur Steuerung und/oder Überwachung eines technischen Prozesses, das mit anderen Automatisierungsgeräten kommunikativ verbindbar ist, **dadurch gekennzeichnet, daß** das Automatisierungsgerät eine Kommunikationsschnittstelle nach einem der Ansprüche 1 bis 4 aufweist.

9. Automatisierungsgerät zur Steuerung und/oder Überwachung eines technischen Prozesses, das mit anderen Automatisierungsgeräten kommunikativ verbindbar ist, **dadurch gekennzeichnet, daß** der Datenaustausch zwischen den kommunikativ verbundenen Automatisierungsgeräten mittels eines Datenübertragungsverfahrens nach einem der Ansprüche 5 bis 7 erfolgt.

## Claims

1. Communications interface for the serial transmission of digital data, at least three signal lines (Tx0, Tx1, Tx2) being provided on each of which a "high" or "low" level can be impressed, **characterized in that** an item of data to be transmitted can be coded by a level change of at least two of the at least three signal lines (Tx0, Tx1, Tx2) and, consequently, by the transition from a first level n tuple to a second level n tuple which differs in at least two level values.

2. Communications interface according to Claim 1, **characterized in that** the first level n tuple or the second level n tuple is a first level triple or a second level triple.

3. Communications interface according to Claim 1 or 2, **characterized in that** the level change of the at least two signal lines takes place in opposite senses.

4. Communications interface according to Claim 1, 2 or 3, **characterized in that** the start and the stop of the data transmission can be coded by an inverting of the respective levels of the three signal lines (Tx0, Tx1, Tx2).

5. Serial data transmission method for the bitwise transmission of digital data, in which at least three signal lines (Tx0, Tx1, Tx2) are provided on each of which a "high" or "low" level can be impressed, **characterized in that** an item of data to be transmitted is coded by a level change of two of the at least three signal lines (Tx0, Tx1, Tx2) and, consequently, by the transition form a first level n tuple to a second level n tuple that differs in at least two level values.

6. Data transmission method according to Claim 5, **characterized in that** the first level n tuple or the second level n tuple is a first level triple or a second level triple, respectively.

7. Data transmission method according to Claim 5 or 6, **characterized in that** the start and the stop of the data transmission is coded by an inversion of the respective levels of the three signal lines (Tx0, Tx1, Tx2).

8. Automation unit for controlling and/or monitoring an industrial process, which automation unit can be communicatively connected to other automation units, **characterized in that** the automation unit is a communications interface according to one of Claims 1 to 4.

9. Automation unit for controlling and/or monitoring an industrial process, which automation unit can be communicatively connected to other automation units, **characterized in that** the data exchange between the communicatively connected automation units takes place by means of a data transmission method according to one of Claims 5 to 7.

## Revendications

1. Interface de communication pour la transmission en série de données numériques, au moins trois lignes de signaux (Tx0, Tx1, Tx2) auxquelles peut être appliqué à chaque fois un niveau "High" ou "Low" étant prévues, **caractérisée par le fait qu'**une donnée à transmettre peut être codée par un changement de niveau d'au moins deux des au moins trois lignes de signaux (Tx0, Tx1, Tx2) et donc par la transition d'un premier n-uplet de niveaux à un deuxième n-uplet de niveaux qui se distingue dans au moins deux valeurs de niveaux.

2. Interface de communication selon la revendication 1, **caractérisée par le fait que** le premier n-uplet de niveaux respectivement le deuxième n-uplet de niveaux est un premier triplet de niveaux respectivement un deuxième triplet de niveaux.

3. Interface de communication selon les revendications 1 ou 2, **caractérisée par le fait que** le changement de niveau des au moins deux lignes de signaux s'effectue en sens contraire.

4. Interface de communication selon les revendications 1, 2 ou 3, **caractérisée par le fait que** le début et la fin de la transmission de données peuvent être codés par une inversion des niveaux respectifs des trois lignes de signaux (Tx0, Tx1, Tx2).

5. Procédé de transmission de données en série pour la transmission par bits de données numériques, au moins trois lignes de signaux (Tx0, Tx1, Tx2) auxquelles peut être appliqué à chaque fois un niveau "High" ou "Low" étant prévues, **caractérisé par le fait qu'**une donnée à transmettre est codée par un changement de niveau de deux des au moins trois lignes de signaux (Tx0, Tx1, Tx2) et donc par la transition d'un premier n-uplet de niveaux à un deuxième n-uplet de niveaux qui se distingue dans au moins deux valeurs de niveaux.

6. Procédé de transmission de données selon la revendication 5, **caractérisé par le fait que** le premier n-uplet de niveaux respectivement le deuxième n-uplet de niveaux est un premier triplet de niveaux respectivement un deuxième triplet de niveaux.

7. Procédé de transmission de données selon les revendications 5 ou 6, **caractérisé par le fait que** le début et la fin de la transmission de données peuvent être codés par une inversion des niveaux respectifs des trois lignes de signaux (Tx0, Tx1, Tx2).

8. Appareil d'automatisation pour la commande et/ou la surveillance d'un processus technique, qui peut être relié pour une communication à d'autres appareils d'automatisation, **caractérisé par le fait que** l'appareil d'automatisation comporte une interface de communication selon l'une des revendications 1 à 4.

9. Appareil d'automatisation pour la commande et/ou la surveillance d'un processus technique, qui peut être relié pour une communication à d'autres appareils d'automatisation, **caractérisé par le fait que** l'échange de données entre les appareils de communication reliés pour une communication s'effectue au moyen d'un procédé de transmission de données selon l'une des revendications 5 à 7.
